(19) Europäisches Patentamt
European Patent Office
Office européen des brevets

(11) **EP 1 905 503 A2**

(12) **EUROPEAN PATENT APPLICATION**
published in accordance with Art. 153(4) EPC

(43) Date of publication:
**02.04.2008 Bulletin 2008/14**

(51) Int Cl.:
**B01D 53/02** *(2006.01)* **C07F 19/00** *(2006.01)*

(21) Application number: **06794024.7**

(22) Date of filing: **14.06.2006**

(86) International application number:
**PCT/ES2006/000349**

(87) International publication number:
**WO 2006/134193 (21.12.2006 Gazette 2006/51)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.06.2005 ES 200501561**

(71) Applicants:
- **UNIVERSIDAD DE GRANADA**
  **E-18071 Granada (ES)**
- **Consejo Superior de Investigaciones Cientificas**
  **28006 Madrid (ES)**
- **Universita' Degli Studi Dell'Insubria**
  **21100 Varese (IT)**
- **UNIVERSITA' DEGLI STUDI DI MILANO**
  **20122 Milano (IT)**

(72) Inventors:
- **RODRÍGUEZ NAVARRO, Jorge Andrés**
  **Oficina de Transferencia**
  **Cuesta del Hospicio, s/n**
  **18071 Granada (ES)**
- **SALAS PEREGRÍN, Juan M.,**
  **Oficina de Transferencia**
  **Cuesta del Hospicio, s/n**
  **18071 Granada (ES)**

- **BAREA MARTÍNEZ, Elisa**
  **Oficina de Transferencia de**
  **Cuesta del Hospicio, s/n**
  **18071 Granada (ES)**
- **PARRA SOTO, José Bernardo**
  **C/ Serrano 117,**
  **28006 Madrid (ES)**
- **OVÍN ANIA, Concepcion**
  **C/ Serrano 117,**
  **28006 Madrid (ES)**
- **MASCIOCCHI, Nomberto**
  **Università degli Studi dell Insubria**
  **Via Ravasi n. 2,**
  **21100 Varese (IT)**
- **GALLI, Simona**
  **Università degli Studi dell Insubria**
  **Via Ravasi n. 2,**
  **21100 Varese (IT)**
- **SIRONI, Angelo**
  **Università degli Studi dell Insubria**
  **Via Ravasi n. 2,**
  **21100 Varese (IT)**

(74) Representative: **Minoja, Fabrizio**
  **Bianchetti Bracco Minoja S.r.l.**
  **Via Plinio, 63**
  **20129 Milano (IT)**

(54) **GAS ADSORBENTS BASED ON MICROPOROUS COORDINATION POLYMERS**

(57)  The invention relates to gas adsorbents based on metal-organic microporous coordination polymers of the metallic bispyrmidinolate-type with a sodalite-type topology, having an adsorbent performance that is typical of crystalline microporous materials. The aforementioned materials also have a large accessible pore volume of between 25 and 45% of the total volume of the material with a monodispersion of pores having diameters of less than 1.3 nm. In addition, the materials have a high capacity for adsorption of small gases, such as carbon monoxide, carbon dioxide, hydrogen, nitrogen, methane, acetylene, etc., which is reversible such that, once said gases have been stored, they can be desorbed. Moreover, owing to the crystalline nature thereof, said materials are suitable for applications associated with the selective adsorption of small molecules such as for the safe storage of combustible gases and for the purification of gases with the elimination of trace impurities using dehydrated metal-organic porous compounds.

**Description**

**Field of the Invention**

This invention relates to two types of processes:

> 1) Purification of gases with the elimination of trace impurities using dehydrated metal-organic coordination polymers.
> 2) Safe storage of combustible gases (hydrogen, methane, acetylene) at low pressures (p < 76.000 mm of Hg) and a temperature range of -195 to +80 degrees Celsius using dehydrated microporous coordination polymers.

**State of the art**

The safe storage of combustible gases (hydrogen, methane, acetylene) is an important challenge in the materials science field. One of the conventional ways of storing this type of gases- use of chemical precursors or compressed at high pressure or liquefied- are expensive and have serious safety drawbacks. Firstly, chemical precursors, such as for example metal hydrides, have slow desorption kinetics and require high temperatures for this process to take place. In addition, extremely low temperatures are needed to liquefy hydrogen and methane (-253 and -195 degrees Celsius, respectively). Likewise, despite the high pressures used in compression processes, the amount of stored gas is small. The compression and expansion process is furthermore unsafe, therefore in some countries, it is forbidden to exceed certain storage pressures (in Japan, pressures greater than 7.600 mm of Hg are not allowed). Finally, it must be emphasized that these compression and cooling processes require an important energy supply, which involves a net loss of up to 30% of the energy of the stored gas. As a result of the above, a great effort has lately been made to develop safer and more efficient storage systems. The result of this research is the storage at high temperatures and lower pressure in adsorbent materials, such as activated carbons, carbon nanotubes, zeolites and porous coordination polymers (Davis, Nature 2002, 417, 813; Zecchina et al, J. Am. Chem. Soc. 2005, 127, 6361; Ripmeester et al, Nature 2005, 434, 743).

Likewise, market pressure is causing the purity standards of many electronic grade gases to increase (US Patent 4732584). With regard to the use of hydrogen in fuel cells, it requires high purity levels (Atwood, Angew. Chem. Int. Ed. 2004, 43, 2948). The industry therefore demands purer gases, so the verification of the contaminant levels in these gases requires an improvement of the methods for purifying and analyzing said gases. Conventional molecular filters cannot eliminate adsorbates, such as nitrogen, with which they have a weak interaction, therefore they have no practical usefulness in this sense. For another matter, polar or polarizable adsorbates are selectively adsorbed from mixtures of less polarizable gases by some molecular filters because they interact strongly with them. Some adsorbates, such as carbon dioxide, carbon monoxide, water, etc, are therefore adsorbed by some molecular filters at low partial pressures and even at room temperature due to their high heat of adsorption. Due to this property, it is possible to purify the majority gas (hydrogen, for example, until the purity levels required for its use.

**Object of the invention**

According to the above, the object of the invention is to provide microporous coordination polymers with the ligands 2-hydroxypyrimidine, 4-hydroxypyrimidine and several derivatives thereof and metal ions of Groups 1 to 17 of the periodic table, which can adsorb combustible gases (hydrogen, methane and acetylene) safely and with suitable kinetics and storage capacity. Likewise, taking into account that one of the most important limitations of the use of combustible gases (the use of hydrogen in fuel cells, for example) is their degree of purity, these materials can also be used in hydrogen, methane and acetylene purification processes due to their capacity to adsorb other gases with a different heat of adsorption than the previous ones, such as carbon dioxide, carbon monoxide, nitrogen, oxygen. Said processes can be carried out in a profitable manner using standard adsorption processes by means of molecular filters built from the microporous coordination polymers object of the invention.

**Description of the invention**

The proposed compounds of the metallic pyrimidinolate type have a series of advantages with respect to conventional gas storage systems, as well as with respect to the molecular filters and zeolites used in the purification of gases:

> 1. They are crystalline materials, therefore they have two fundamental advantages in this sense:
>
> > i) They have a monodispersion of pore sizes having diameters of less than 2 nm. This is an advantage with respect to amorphous systems such as microporous silica or activated carbon, having a great dispersion of pore sizes. The fact that these compounds have a homogenous pore size makes them suitable for applications such as the selective adsorption of gases and processes of separating them typical of molecular sieves.

ii) Another major advantage conferred by the fact of being crystalline materials is the reproducibility of their synthesis methods and properties. For example, activated carbons are difficult to reproduce and their properties are highly dependent on the reactants used and on the activation conditions. Likewise, synthetic zeolites are usually obtained by hydrothermal synthesis methods in the presence of template-effect organic cations. Also in this case, the characteristics of the resulting material are highly dependent on the synthesis method, on the composition of the reactants and on the activation treatment which furthermore normally requires very high temperatures.

2. Another advantage of these proposed materials with respect to synthetic zeolites and other similar microporous coordination polymers is that they are obtained by a very simple reaction in aqueous medium. Said synthesis reaction is reproducible, quantitative, is not harmful for the environment and the cost of the reactants is low.

3. The activation temperature of the coordination compounds object of the patent is low: 120 degrees Celsius for a time period of two hours at a pressure of less than 0.0001 mm of Hg.

4. They are materials with high thermal stability. For example, they are stable to the air up to temperatures of 350 degrees Celsius in the case of $[Pd(2\text{-hydroxypyrimidine})_2]_n$.

5. In said materials, the size and the functionalization of the cavities of the micropores allow the storage of small molecules of combustible gases such as hydrogen, methane, acetylene. The small size of said pores (less than 2 nm) makes the contact between the adsorbed gas molecules and the porous surface of the material maximum, therefore there will be a very strong adsorbate-adsorbent interaction. In this sense, another favorable factor is the presence of metal ions giving rise to polarization and quadrupolar interactions.

6. In contrast with zeolites or other microporous coordination compounds, X-ray thermal diffractometry studies have clearly shown that the compounds object of the patent can have a flexible skeleton by means of which the porous system can be adapted to the size of a certain host molecule and, as a result, increase the efficiency of the adsorption process.

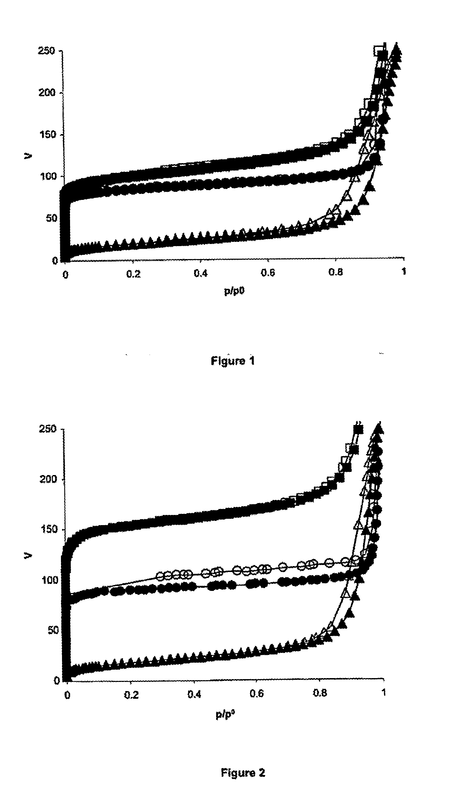

7. In practice, the microporous coordination polymers object of this patent give rise to reversible gas adsorption processes (carbon dioxide, carbon monoxide, water, nitrogen, oxygen, methane, hydrogen). Said compounds have type-I isotherms, therefore their regeneration is possible (see Figures 1, 2, 3 and 4).

## Detailed description of the invention

The invention consists of using microporous coordination polymers formed by metal ions coordinated to organic ligands, at least bidentate ligands, such as 2-hydroxypyrimidine, 4-hydroxypyrimidine and several derivatives of both, in the storage of methane, hydrogen and acetylene, as well of their use in the purification of methane, hydrogen and argon.

The structural formula of the microporous coordination polymers will be of the $[M(\text{pyrimidinolate})_x]_n$ type (where x= 1, 2 or 3). The synthesis methods and structural characterization of some of these microporous coordination polymers the use of which is object of the patent are described in the following publications: L.C. Tabares et al., J. Am. Chem. Soc. 2001, 123, 383-387; E. Barea et al., Polyhedron 2003, 22, 3051-3057; E. Barea et al., J. Am. Chem. Soc. 2004, 126, 3014-3015.

The applications of the microporous coordination polymers described in the publications referred to in the safe storage of combustible gases (hydrogen, methane, acetylene) at low pressures (p < 76.000 mm of Hg) and a temperature range of (-195 to 80 degrees Celsius) and the purification of gases with the elimination of trace impurities is completely incorporated to the present patent.

The coordination polymers used in this invention are porous, specifically microporous. Micropores are defined as pores with a diameter of 2 nm or less, according to the definition provided in Pure Applied Chem. 1976, 45, p. 71. The presence of said micropores is clearly shown by means of measurements to determine the capacity of the microporous coordination polymer to adsorb nitrogen at -196 degrees Celsius according to DIN 66131 and/or DIN 66134. The specific areas mentioned in the context of this invention have always been determined according to DIN 66131 and/or DIN 66134.

For example, a type-I isotherm indicates the presence of micropores. The specific surface area, calculated according to the Langmuir model (DIN 66131, 66134) for this type of compounds, is preferably greater than 5 $m^2$/g, more preferably greater than 10 $m^2$/g, even more preferably greater than 50 $m^2$/g, especially preferably greater than 500 $m^2$/g.

The metal ions forming the microporous coordination polymers are selected from Groups 1 to 17 of the periodic table of elements and can have oxidation states of +1 to +3. Any combination of two to four elements belonging to Groups 1 to 17 of the periodic table in proportions ranging between 1% and 99% is possible.

The organic ligands present in the microporous coordination polymers are able to be coordinated with the metal ion. The ligands, at least bidentate ligands, present in the microporous coordination polymers are any of those listed below:

    i) 2-hydroxypyrimidine.
    ii) 2-hydroxypyrimidine derivatives with substituents in position 5, such as halogen, alkyl, amino, nitro, nitrosyl.
    iii) 4-hydroxypyrimidine.
    iv) 4-hydroxypyrimidine derivatives with substituents in position 5, such as halogen, alkyl, amino, nitro, nitrosyl.

The microporous coordination polymers of the type described containing $Cu^{2+}$ as a metal ion and the ligands 2-hydroxypyrimidine and 4-hydroxypyrimidine ($[Cu(pyrimidin-2-olate)_2]_n$ and $[Cu(pyrimidin-4-olate)_2]_n$), those containing $Pd^{2+}$ as a metal ion and the ligand 2-hydroxypyrimidine ($[Pd(pyrimidin-2-olate)_2]_n$) as well as those containing $Ni^{2+}$ as a metal ion and the ligand 2-hydroxypyrimidine ($[Ni(pyrimidin-2-olate)_2]_n$) are emphasized.

The size of the pores of the skeleton of the microporous coordination polymer can be modulated by selecting the metal ion and the suitable bidentate ligand, as well as its functionalization. Any pore size that is present in the microporous coordination polymer in the absence of hosts and up to temperatures of 250 degrees Celsius is possible. The pore sizes in a range of 0.3 nm to 30 nm are preferred, and pore sizes in the range of 0.3 nm to 3 nm are especially preferred. The volume of micropores that these compounds have is very high, approximately between 25% and 50% of the total volume thereof, all the micropores having a size of less than 2 nm. The apparent microporous surface of these compounds calculated by the BET method based on the analysis of the adsorption isotherms of $N_2$ at -196 degrees Celsius gives values of 350 $m^2g^{-1}$ for the compound $[Cu(pyrimidin-2-olate)_2]_n$ and of 600 $m^2g^{-1}$ for the compound $[Pd(pyrimidin-2-olate)_2]_n$.

As a result of their porous structure, the proposed compounds behave like efficient adsorbents of hydrogen, carbon monoxide, carbon dioxide and nitrogen as shown by the gas adsorption measurements (see Figures 1, 2, 3 and 4).

In summary, the proposed compounds are microporous coordination polymers for gas adsorption using as a coordination compound any compound of the metal pyrimidinolate type with structural formula: $[M(pyrimidinolate)_x]_n$, where x takes values of 1 to 3. These coordination polymers are used for the selective adsorption of one or more minority constituents of a majority gas containing one or more of said minority constituents.

    1. They can be used for the selective adsorption of gases in which the majority constituent is hydrogen and the minority constituents are methane, carbon dioxide, carbon monoxide, oxygen, nitrogen or mixtures thereof; for separating mixtures of gases in which the majority constituent is methane and the minority constituents are carbon dioxide, carbon monoxide, oxygen, nitrogen or mixtures thereof; for separating mixtures of gases in which the majority constituent is argon, helium, krypton, neon, xenon, or mixtures thereof and the minority constituents are carbon dioxide, carbon monoxide, oxygen, nitrogen or mixtures thereof; for storing hydrogen, methane, acetylene and mixtures thereof.

A process of separating one or more minority constituents from a majority gas containing one or more of said minority constituents has also been developed, characterized in that the mixture of gases is placed in contact with the mentioned microporous coordination polymers.

In this process of separating gases, the adsorption temperature is comprised in the range of -195 degrees Celsius to +80 degrees Celsius and is carried out at pressures of less than 76.000 mm of Hg. Furthermore, the metal ion of the coordination compound is an element of Groups 1 to 17 and combinations of 2 to 4 elements belonging to Groups 1 to 17 of the periodic table, in proportions ranging between 1% and 99%. The ions $Ni^{2+}$, $Cu^{2+}$ and $Pd^{2+}$ will preferably be used. In said compounds, the organic ligands are 2-hydroxypyrimidine and/or 4-hydroxypyrimidine and/or derivatives thereof with substituents in position 5, such as halogen, alkyl, amino, nitrosyl and nitro. From 2 to 3 of the following ligands can also be used:

    i) 2-hydroxypyrimidine.
    ii) 2-hydroxypyrimidine derivatives with substituents in position 5, such as halogen, alkyl, amino, nitro, nitrosyl.
    iii) 4-hydroxypyrimidine.
    iv) 4-hydroxypyrimidine derivatives with substituents in position 5 such as halogen, alkyl, amino, nitro, nitrosyl.

These processes separate gases in which the majority constituent is hydrogen and the minority constituents are methane, carbon dioxide, carbon monoxide, oxygen, nitrogen or mixtures thereof; in which the majority constituent is methane and the minority constituents are carbon dioxide, carbon monoxide, oxygen, nitrogen or mixtures thereof; or in which the majority constituent is argon, helium, krypton, neon, xenon, or mixtures thereof and the minority constituents are carbon dioxide, carbon monoxide, oxygen, nitrogen or mixtures thereof.

In the same aspect, associated to the described polymers a gas storage process has also been developed in which the storage temperature is comprised in the range of -195 degrees Celsius to +80 degrees Celsius and is carried out at pressures of less than 76.000 mm of Hg.

An element from Groups 1 to 17 and combinations of 2 to 4 elements belonging to groups 1 to 17 of the periodic table can also be used for this process as a metal ion in proportions ranging between 1% and 99% and, preferably ions $Ni^{2+}$, $Cu^{2+}$ and $Pd^{2+}$.

In the compounds used in this process the organic ligands are 2-hydroxypyrimidine and/or 4-hydroxypyrimidine and/or derivatives thereof with substituents in position 5, such as halogen, alkyl, amino, nitrosyl and nitro, or the organic ligands are combinations of 2 to 3 of the following ligands:

  a. 2-hydroxypyrimidine.
  b. 2-hydroxypyrimidine derivatives with substituents in position 5, such as halogen, alkyl, amino, nitro, nitrosyl.
  c. 4-hydroxypyrimidine.
  d. 4-hydroxypyrimidine derivatives with substituents in position 5, such as halogen, alkyl, amino, nitro, nitrosyl.

This process is useful for storing hydrogen, methane, acetylene and/or mixtures thereof.

## Examples

**Example 1.** An aqueous solution of 1.305 g. of potassium tetrachloropalladate in 40 mL of water was mixed with another containing 1.060 g. of the hydrochloride of the 2-hydroxypyrimidine dissolved in 20 mL of water. The resulting mixture was stirred for one hour at room temperature and a yellow powdery precipitate of $[Pd(pyrimidin-2-ol)_2Cl_2]$ was obtained with a yield of 95%. Said product was suspended in distilled water (40 mL) and 1 M NaOH was added dropwise until a stable pH value of 7.0 was reached. The resulting suspension was maintained under reflux for 48 hours and a pale yellow precipitate of hydrated $[Pd(pyrimidin-2-olate)_2]_n$ was isolated with a yield of 98%. Said product was washed several times with distilled water, ethyl alcohol and ether and it was finally left to air dry.

Before carrying out the gas adsorption measurements the $[Pd(pyrimidin-2-olate)_2]_n$ product was dehydrated preferably at 120 degrees Celsius for 12 hours apply a pressure of less than 0.0001 mm Hg.

**Example 2.** $[Cu(pyrimidin-2-olate)_2]_n$ and $[Cu(pyrimidin-4-olate)_2]_n$ were prepared according to the literature references L.C. Tabares et al., J. Am. Chem. Soc. 2001, 123, 383-387 and E. Barea et al., Polyhedron 2003, 22, 3051-3057.

Before carrying out the adsorption measurements, the products $[Cu(pyrimidin-2-olate)_2]_n$ and $[Cu(pyrimidin-4-olate)_2]_n$ were dehydrated at 120 degrees Celsius for 12 hours by applying a pressure of less than 0.0001 mm Hg.

**Example 3.** The adsorbing properties of the anhydrous compounds of examples 1 and 2 were examined by means of nitrogen, carbon monoxide and hydrogen adsorption measurements at a temperature of -196 Celsius. The resulting adsorption isotherms are shown in Figures 1, 2 and 3.

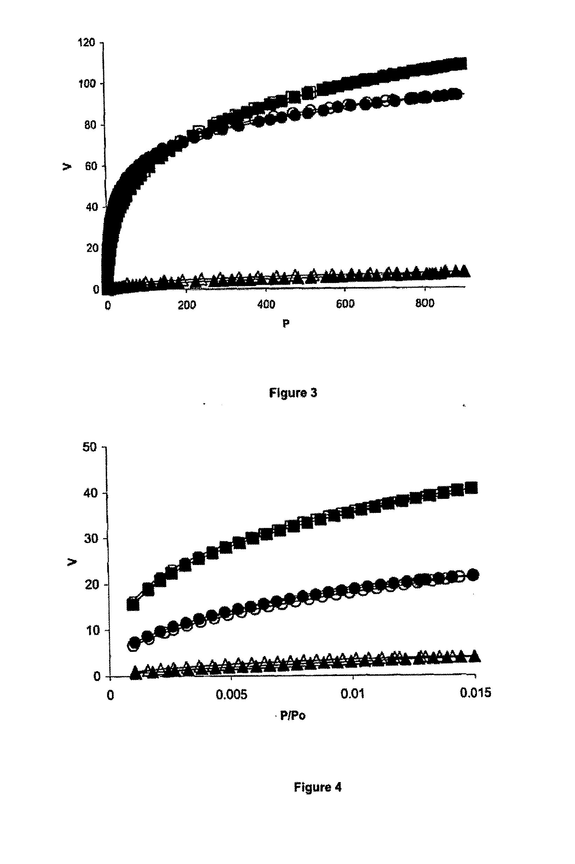

**Example 4.** The adsorbing properties of carbon dioxide of the anhydrous compounds of examples 1 and 2 were examined by means of carbon dioxide adsorption measurements at 20 degrees Celsius. The adsorption isotherms are shown in Figure 4.

**Example 5.** The accessible surface area for the nitrogen molecules calculated from the nitrogen adsorption values shown in Figure 2, using the BET method, provide apparent specific area values of 600 $m^2g^{-1}$ for $[Pd(pyrimidin-2-olate)_2]_n$, 350 $m^2g^{-1}$ for $[Cu(pyrimidin-2-olate)_2]_n$ and 65 $m^2g^{-1}$ for $[Cu(pyrimidin-4-olate)_2]_n$ Likewise the adsorption curves are according to a monodispersion of micropores with a diameter of less than 1.2 nm.

**Example 6.** The hydrogen storage capacity at -196 degrees Celsius and a pressure of 900 mmHg calculated from the adsorption isotherm included in Figure 3 is 9.7 g of hydrogen per Kg of adsorbent $[Pd(pyrimidin-2-olate)_2]_n$ In addition, the adsorption density of this material is 20.5 grams of hydrogen per liter of adsorbent.

**Example 7.** The hydrogen storage capacity at -196 degrees Celsius and a pressure of 900 mmHg calculated from the adsorption isotherm included in Figure 3 is 8.4 g of hydrogen per Kg of adsorbent $[Cu(pyrimidin-2-olate)_2]_n$ In addition, the adsorption density of this material is 16.4 grams of hydrogen per liter of adsorbent.

**Example 8.** The isotherms of carbon dioxide at 20 degrees Celsius shown in Figure 4 are indicative of high carbon dioxide retention by the microporous coordination compounds $[Pd(pyrimidin-2-olate)_2]_n$ and $[Cu(pyrimidin-2-olate)_2]_n$ Therefore said compounds can be considered suitable for eliminating carbon dioxide from mixtures of gases in which carbon dioxide is a minority gas and hydrogen is a majority gas. The optimal way to carry out said processes is to use a chromatographic bed formed by $[Pd(pyrimidin-2-olate)_2]_n$ and/or $[Cu(pyrimidin-2-olate)_2]_n$ through which the current of hydrogen passes as a majority gas impurified with carbon dioxide. The chromatographic bed must be in contact with a refrigerant (such as for example refrigerant mixtures of dry ice/acetone) maintaining the temperature between 0 degrees Celsius and -78 degrees Celsius.

**Example 9.** The isotherms of carbon monoxide at -196 degrees Celsius shown in Figure 1 are indicative of high carbon monoxide retention by the microporous coordination compounds $[Pd(pyrimidin-2-olate)_2]_n$ and $[Cu(pyrimidin-2-olate)_2]_n$ in low pressure areas. For this reason these compounds are suitable for eliminating carbon monoxide from mixtures of gases in which carbon monoxide is a minority gas and hydrogen is a majority gas. The optimal way to carry out said processes is to use a chromatographic bed formed by [Pd(pyrimidin-2- olate)$_2$]$_n$ and/or [Cu(pyrimidin-2-olate)$_2$]$_n$ and pass the current of hydrogen as a majority gas impurified with carbon monoxide. The chromatographic bed must be in contact with a refrigerant maintaining the temperature between -78 degrees Celsius and -195 degrees Celsius.

**Example 10**. The adsorption isotherms of nitrogen at -196 degrees Celsius shown in Figure 2 indicate high nitrogen retention by the microporous coordination compounds [Pd(pyrimidin-2-olate)$_2$]$_n$ and [Cu(pyrimidin-2-olate)$_2$]$_n$ in low pressure areas. To that end, these compounds are suitable for eliminating nitrogen from mixtures of gases in which nitrogen is a minority gas and hydrogen is a majority gas. The optimal way to carry out said processes is to use a chromatographic bed formed by [Pd(pyrimidin-2-olate)$_2$]$_n$ and/or [Cu(pyrimidin-2-olate)$_2$]$_n$ and pass the mixture of gases with hydrogen as a majority gas impurified with nitrogen. The chromatographic bed must be in contact with a refrigerant maintaining the temperature between -78 degrees Celsius and -195 degrees Celsius.

**Example 11.** The adsorption isotherms of nitrogen at -196 degrees Celsius shown in Figure 2 indicate a high nitrogen retention by the microporous coordination compounds [Pd(pyrimidin-2- olate)$_2$]$_n$ and [Cu(pyrimidin-2-olate)$_2$]$_n$ in the low pressure areas, therefore they are suitable for eliminating nitrogen from mixtures of gases in which nitrogen is a minority gas and helium is a majority gas. The preferred way to carry out said processes is to use a chromatographic bed formed by [Pd(pyrimidin-2-olate)$_2$]$_n$ and/or [Cu(pyrimidin-2-olate)$_2$]$_n$ and pass the stream of helium, as a majority gas, impurified with nitrogen. The chromatographic bed must be in contact with a refrigerant maintaining the temperature between -78 degrees Celsius and -195 degrees Celsius.

**Description of the drawings**

Figure 1. Adsorption isotherms of carbon monoxide at -196 degrees Celsius for ([Pd(pyrimidin-2-olate)$_2$]$_n$ (squares), [Cu(pyrimidin-2-olate)$_2$]$_n$ (circles) and [Cu(pyrimidin-4-olate)$_2$]$_n$ (triangles). The desorption processes are represented by open symbols. The reversibility of the isotherms is observed in all cases.

The x-axis shows the partial pressure of carbon monoxide. The y-axis shows the amount of adsorbed carbon monoxide expressed in cubic centimeters of gas in normal pressure and temperature conditions.

Figure 2. Adsorption isotherms of nitrogen at -196 degrees Celsius for ([Pd(pyrimidin-2-olate)$_2$]$_n$ (squares), [Cu (pyrimidin-2-olate)$_2$]$_n$ (circles) and [Cu(pyrimidin-4-olate)$_2$]$_n$ (triangles). The desorption processes are represented by open symbols. The reversibility of the isotherms is observed in all cases. The x-axis shows the partial pressure of nitrogen. The y-axis shows the amount of adsorbed nitrogen expressed in cubic centimeters of gas in normal pressure and temperature conditions.

Figure 3. Adsorption isotherms of hydrogen at -196 degrees Celsius for ([Pd(pyrimidin-2-olate)$_2$]$_n$ (squares), [Cu(pyrimidin-2-olate)$_2$]$_n$ (circles) and [Cu(pyrimidin-4-olate)$_2$]$_n$ (triangles). The desorption processes are represented by open symbols. The reversibility of the isotherms is observed in all cases. The x-axis shows the pressure of hydrogen in mm of Hg. The y-axis shows the amount, of hydrogen adsorbed expressed in cubic centimeters of gas in normal pressure and temperature conditions.

Figure 4. Adsorption isotherms of carbon dioxide at 20 degrees Celsius for ([Pd(pyrimidin-2-olate)$_2$]$_n$ (squares), [Cu(pyrimidin-2-olate)$_2$]$_n$ (circles) and [Cu(pyrimidin-4-olate)$_2$]$_n$ (triangles). The desorption processes are represented by open symbols. The reversibility of the isotherms is observed in all cases. The x-axis shows the partial pressure of carbon dioxide. The y-axis shows the amount of adsorbed carbon dioxide expressed in cubic centimeters of gas in normal pressure and temperature conditions.

**Claims**

1. Microporous coordination polymers for gas adsorption, **characterized in that** the coordination compound is of the metal pyrimidinolate type with structural formula:

$$[M(pyrimidinolate)_x]_n \text{ where x takes values of 1 to 3.}$$

2. Coordination polymers for the selective adsorption of one or more minority constituents from a majority gas containing one or more of said minority constituents, **characterized in that** the coordination compound is of the metal pyrimidinolate type with structural formula $[M(pyrimidinolate)_x]_n$ where x takes values of 1 to 3.

3. The use of microporous coordination polymers according to the previous claims for the selective adsorption of gases in which the majority constituent is hydrogen and the minority constituents are methane, carbon dioxide, carbon monoxide, oxygen, nitrogen or mixtures thereof.

4. The use of microporous coordination polymers according to claims 1 and 2 for separating mixtures of gases in which the majority constituent is methane and the minority constituents are carbon dioxide, carbon monoxide, oxygen, nitrogen or mixtures thereof.

5. The use of microporous coordination polymers according to claims 1 and 2 for separating mixtures of gases in which the majority constituent is argon, helium, krypton, neon, xenon, or mixtures thereof and the minority constituents are carbon dioxide, carbon monoxide, oxygen, nitrogen or mixtures thereof.

6. The use of microporous coordination polymers according to claims 1 and 2 for storing hydrogen, methane, acetylene and mixtures thereof.

7. A process of separating one or more minority constituents from a majority gas containing one or more of said minority constituents,
**characterized in that** the mixture of gases is placed in contact with the microporous coordination polymers according to claims 1 and 2.

8. A process of separating gases according to claim 7, **characterized in that** the adsorption temperature is comprised in the range of - 195 degrees Celsius to +80 degrees Celsius.

9. A process of separating gases according to claims 7 and 8, **characterized in that** it is carried out at pressures of less than 76.000 mm of Hg.

10. A process of separating gases according to claims 7, 8 and 9, **characterized in that** the metal ion of the coordination compound is an element from Groups 1 to 17 and combinations of 2 to 4 elements belonging to Groups 1 to 17 of the periodic table, in proportions ranging between 1% and 99%.

11. A process of separating gases according to claims 7, 8 and 9, **characterized in that** the metal ion of the coordination compound is $Ni^{2+}$, $Cu^{2+}$ or $Pd^{2+}$.

12. A process according to claims 7 to 11, **characterized in that** the organic ligands are 2-hydroxypyrimidine and/or 4- hydroxypyrimidine and/or derivatives thereof with substituents in position 5, such as halogen, alkyl, amino, nitrosyl and nitro.

13. A process according to claim 7 to 11, **characterized in that** the organic ligands are combinations of 2 to 3 of the following ligands:

  i) 2-hydroxypyrimidine.
  ii) 2-hydroxypyrimidine derivatives with substituents in position 5, such as halogen, alkyl, amino, nitro, nitrosyl.
  iii) 4-hydroxypyrimidine.
  iv) 4-hydroxypyrimidine derivatives with substituents in position 5, such as halogen, alkyl, amino, nitro, nitrosyl.

14. A process of separating gases according to claims 7 to 13, **characterized in that** the majority constituent is hydrogen and the minority constituents are methane, carbon dioxide, carbon monoxide, oxygen, nitrogen or mixtures thereof.

15. A process of separating gases according to claims 7 to 13, **characterized in that** the majority constituent is methane and the minority constituents are carbon dioxide, carbon monoxide, oxygen, nitrogen or mixtures thereof.

16. A process of separating gases according to claims 7 to 13, **characterized in that** the majority constituent is argon, helium, krypton, neon, xenon, or mixtures thereof and the minority constituents are carbon dioxide, carbon monoxide, oxygen, nitrogen or mixtures thereof.

17. A gas storage process **characterized in that** the gas is placed in contact with the microporous coordination polymers according to claims 1 and 2.

18. A gas storage process according to claim 17, **characterized in that** the storage temperature is comprised in the range of -195 degrees Celsius to +80 degrees Celsius.

**19.** A gas storage process according to claim 17 and 18, **characterized in that** it is carried out at pressures of less than 76.000 mm of Hg.

**20.** A gas storage process according to claims 17, 18 and 19, **characterized in that** the metal ion is an element from groups 1 to 17 and combinations of 2 to 4 elements belonging to Groups 1 to 17 of the periodic table, in proportions ranging between 1% and 99%.

**21.** A gas storage process according to claims 17, 18, 19 and 20, **characterized in that** the metal ion of the coordination compound is $Ni^{2+}$, $Cu^{2+}$ or $Pd^{2+}$.

**22.** A process according to claims 17, 18, 19, 20 and 21, **characterized in that** the organic ligands are 2-hydroxypyrimidine and/or 4-hydroxypyrimidine and/or derivatives thereof with substituents in position 5, such as halogen, alkyl, amino, nitrosyl and nitro.

**23.** A process according to claims 17, 18, 19, 20, 21 and 22, **characterized in that** the organic ligands are combinations of 2 to 3 of the following ligands:

    a. 2-hydroxypyrimidine.
    b. 2-hydroxypyrimidine derivatives with substituents in position 5, such as halogen, alkyl, amino, nitro, nitrosyl.
    c. 4-hydroxypyrimidine.
    d. 4-hydroxypyrimidine derivatives with substituents in position 5, such as halogen, alkyl, amino, nitro, nitrosyl.

**24.** A gas storage process by means of microporous coordination polymers according to claims 16, 17, 18, 19, 20, 21, 22 and 23 for storing hydrogen, methane, acetylene and mixtures thereof.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4732584 A

**Non-patent literature cited in the description**

- **DAVIS.** *Nature,* 2002, vol. 417, 813
- **ZECCHINA et al.** *J. Am. Chem. Soc.,* 2005, vol. 127, 6361
- **RIPMEESTER et al.** *Nature,* 2005, vol. 434, 743
- **ATWOOD.** *Angew. Chem. Int. Ed.,* 2004, vol. 43, 2948
- **L.C. TABARES et al.** *J. Am. Chem. Soc.,* 2001, vol. 123, 383-387
- **E. BAREA et al.** *Polyhedron,* 2003, vol. 22, 3051-3057
- **E. BAREA et al.** *J. Am. Chem. Soc.,* 2004, vol. 126, 3014-3015